# EUROPEAN PATENT APPLICATION

(11) **EP 3 136 235 A1**
(43) Date of publication of application: **01.03.2017**
(21) Application number: 14893052.2
(22) Date of filing: 15.07.2014
(51) Int. Cl.: G06F 9/50

(54) **MEMORY CONFIGURATION METHOD AND DEVICE**

(30) Priority: 28.05.2014 CN 201410231230
(71) Applicant: ZTE Corporation, Shenzhen, Guangdong 518057 (CN)
(72) Inventor: JIANG, Min, Shenzhen Guangdong 518057 (CN)
(74) Representative: Benson, Christopher
(86) International application number: PCT/CN2014/082286
(87) International publication number: WO 2015/180245

(57) **Abstract**

The present invention provides a memory configuration method and device, which are applied to a terminal with a memory. The memory configuration method specifically includes: a test step, testing a memory usage efficiency of the memory corresponding to each compression space configuration respectively according to multiple compression space configurations; and a configuration step, configuring the memory according to a compression space configuration with the highest memory usage efficiency. The memory configuration method and device of the present invention can dynamically adjust the size of the compression space in the memory compression technology according to different programs run by various users, thereby achieves the purpose of improving furthest the system memory usage efficiency, and avoids the problem in the existing technology that the memory usage efficiency of part of user terminals is decreased instead after using the memory compression technology.

## Description

### Technical Field

The present invention relates to the field of computer, and in particular, to a memory configuration method and device.

### Background

With the rapid development of the intelligent terminals, application programs available for people to download and install will be more and more, the volume will become larger and larger, and the requirement of a single application program for the memory is continuously increasing. The memory of a terminal rapidly becomes larger from 256M, 512M, 1G and 2G.

Besides that the performance of the terminal has a great relation with Central Processing Unit (CPU) and Graphic Processing Unit (GPU), memory performance, especially the length of time for allocating the memory, is also one aspect that severely affects the terminal performance. Due to the technical, cost consideration and the like, the physical memory of the terminal is also rather limited. With more and more programs being installed and run by the users on the terminal, even more memory also appears to be tighter, and applying for the memory takes more and more time. How to increase the efficiency of the terminal memory especially the allocation efficiency of the terminal memory on the limited terminal memory becomes one of technical commanding heights for which are competed by various major operating system and terminal manufacturing and research and development manufacturers.

The memory compression technology is a common method to improve the memory performance under a limited hardware memory condition. The main idea thereof is to compress data according to a certain algorithm and then store the data into a compressed memory, and the system finds the compressed data from the compressed memory and decompresses the data for using by the system. This can not only increase the actual available memory space, but also reduce the overhead caused by the page replacement, thereby improving the entire performance of the system with lower costs.

For example, Compcache-Compressed Caching for Linux, a predecessor of the memory compression technology zRAM, has circulated in the Android civil development communities since 2009. Google adds this technology into a KitKat (Android 4.4) update list after two years of development and improvement. Its advantage is that the page cache makes the system memory usage more effective, and the effect is equivalent to that the memory seems to be expanded. However, since the zRAM is required to open up a small block of memory to serve as a compressed block for use, the burden is increased instead on the device that originally has a small memory, which is a disadvantage.

On the one hand, the space that can be used by the users is reduced since the memory compression technology requires to pre-allocate a block of memory to be used as the compressed storage space; on the other hand, the memory space can also be indirectly increased by the compression technology, which reduces the time for the application program to read and write the file system, and improves the system efficiency. zRam technology is similarly used, since the habits of different users using the software are different, compared with not using the Zram technology, the overall performance of the system is improved for part of users after testing, but the overall performance of the system for some other part is reduced. Therefore, the effects of the memory compression may be opposite in different operation scenarios, thus the prospect of current usage is not clear, for example, though the zRam has been integrated into the Android 4.4, the function is not opened yet, the manufacturers also hold a skeptical attitude, and most of them do not use the function.

### Summary of the Invention

In view of this, the embodiments of the present invention provide a memory configuration method and device, to solve the problem in the existing technology that the memory application efficiency of part of terminal users is decreased instead after using the memory compression technology.

In order to solve the above problem, the embodiment of the present invention provides a memory configuration method for a terminal with a memory, and the memory configuration method includes:
a test step, testing a memory usage efficiency of the memory corresponding to each compression space configuration respectively according to a plurality of compression space configurations; and
a configuration step, configuring the memory according to a compression space configuration with a highest memory usage efficiency.

Alternatively, the memory usage efficiency is described by a memory application time consumption value, the smaller the memory application time consumption value is, the higher the memory usage efficiency is.

Alternatively, a size of a compression space to be tested that corresponds to the plurality of compression space configurations is evenly distributed in an interval [0, F/2], herein F represents the size of the physical space of the memory.

Alternatively, testing a memory usage efficiency of the memory corresponding to each compression space configuration includes:
a configuration step, configuring the memory according to the current compression space configuration;
a memory application step, performing at least one memory application operation on the configured memory; and
an efficiency statistics step, acquiring a consumption time of the memory application operation to serve as the memory application time consumption value corresponding to the current compression space configuration.

Alternatively, there are a plurality of memory application operations in the memory application step, and an amount of memory application corresponding to each memory application operation is different.

Alternatively, an amount of memory application corresponding to the plurality of memory application operations is evenly distributed in an interval [0, F/2], herein F represents the size of the physical space of the memory.

Alternatively, the terminal is in a standby idle state.

The embodiment of the present invention further provides a memory configuration device, which is applied to a terminal with a memory, and the memory configuration device includes:
a test module, testing a memory usage efficiency of the memory corresponding to each compression space configuration respectively according to a plurality of compression space configurations; and
a configuration module, configuring the memory according to a compression space configuration with a highest memory usage efficiency.

Alternatively, the memory usage efficiency is described by a memory application time consumption value, the smaller the memory application time consumption value is, the higher the memory usage efficiency is.

Alternatively, the size of the compression space to be tested corresponding to the plurality of compression space configurations is evenly distributed in an interval [0, F/2], herein F represents the size of the physical space of the memory.

Alternatively, testing a memory usage efficiency of the memory corresponding to each compression space configuration includes:
a configuration unit, configuring the memory according to a current compression space configuration;
a memory application unit, performing at least one memory application operation on the configured memory; and
an efficiency statistics unit, acquiring a consumption time of the memory application operation to serve as the memory application time consumption value corresponding to the current compression space configuration.

Alternatively, there are a plurality of memory application operations in the memory application unit, and an amount of memory application corresponding to each memory application operations is different.

The memory configuration method and device of the present invention can dynamically adjust the size of the compression space in the memory compression technology according to a different programs run by various user, thereby achieves the purpose of improving furthest the system memory usage efficiency, and avoids the problem in the existing technology that the memory usage efficiency of part of user terminals is decreased instead after using the memory compression technology.

### Brief Description of Drawings

FIG. 1 is a schematic diagram of a flow of a memory configuration method according to the embodiment of the present invention;
FIG. 2 is a schematic diagram of a structure of a memory configuration device according to the embodiment of the present invention; and
FIG. 3 is another schematic diagram of a flow of a memory configuration method according to the embodiment of the present invention.

### Specific Embodiments

In order to make the technical problem to be solved, technical scheme and beneficial effects of the present invention more clear, detailed descriptions will be made in combination with the accompanying drawings and specific embodiments below.

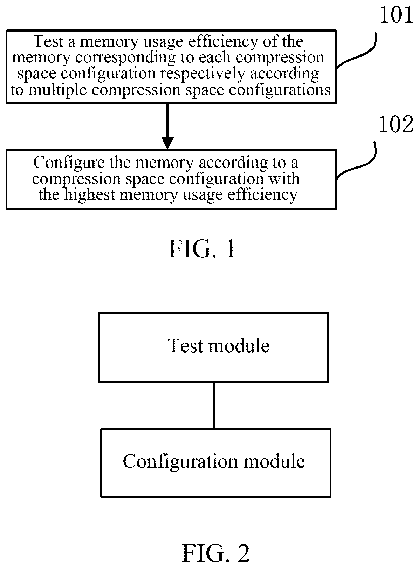

FIG. 1 is a schematic diagram of a flow of a memory configuration method according to the embodiment of the present invention. As shown in FIG. 1, the present invention provides a memory configuration method for a terminal with a memory, and the above memory configuration method includes:
In a test step 101, it is to test a memory usage efficiency of the memory corresponding to each compression space configuration respectively according to a plurality of compression space configurations.

In a configuration step 102, it is to configure the memory according to a compression space configuration with the highest memory usage efficiency.

In the above memory configuration method of the embodiment, the compression space configuration with the highest memory usage efficiency is acquired to perform memory configuration by testing the memory usage efficiencies of the above plurality of compression space configurations, and thus the compression space configuration of the memory of the terminal can be dynamically adjusted, which achieves the purpose of improving furthest the application efficiency of the system memory.

Since the habits of various users using the application programs are different, the storage status of the memory of the terminal used by each user will be different after using the terminal for a period of time, and the compression space configuration of the memory of the terminal can be dynamically adjusted through the technical scheme of the embodiment according to the different application usage habits of various user, it is flexible and convenient and improves the memory application efficiency of the terminal, and also increases the user experience.

Alternatively, the above memory usage efficiency is described by a memory application time consumption value, the smaller the memory application time consumption value is, the higher the memory usage efficiency is. The above memory application time consumption value refers to a consumption time of the memory application operation. Of course, the memory usage efficiency may also be described in other ways, such as a read-write speed of the memory.

Alternatively, the size of the compression space to be tested corresponding to the above plurality of compression space configurations is evenly distributed in an interval [0, F/2], herein F represents the size of the physical space of the above memory.

For the selection of the size of the compression space, it is preferably that the size of the above compression space to be tested each time is different, and it has certain representativeness. In the embodiment, it is preferably that the size of the above compression space to be tested is evenly distributed within half of the scope of the size of the physical space of the above memory, for example, the memory of the terminal is 512M, the size of the above compression space tested may be evenly distributed in an interval [0, 256], if the tests are performed 9 times, the size of the compression space of the test each time is respectively: 0, 32, 64, 96, 128, 160, 192, 224 and 256 (unit: M), herein 0 identifies that a memory compression test is not started.

Of course, the size of the above compression space of the test of each time may also be determined in other ways. For example, it is assumed that the physical memory size available to the terminal is F, the number of calculations required n may be adjusted according to the accuracy of the calculation, each time the F/2 is averaged as equal parts of the current test remaining times, and an array Z(0...n) may be obtained through the calculation.

For example, if n=8, the size of the Z(0..n) may be set as:
* herein Z0=0 represents that the memory compression test technology is not started. The array Z(0...n) is of the size of n+1 compression spaces required to be set by the following memory compression technology. According to the measurement and calculation, the size of n is not required to be too large, generally it may be 6-10.

Alternatively, testing the memory usage efficiency of the above memory corresponding to each compression space configuration includes:
a configuration step, it is to configure the above memory according to the current compression space configuration;
a memory application step, it is to perform at least one memory application operation on the above configured memory; and
an efficiency statistics step, acquiring a consumption time of the above memory application operation to serve as the above memory application time consumption value corresponding to the above current compression space configuration.

The above embodiment describes a test for the memory usage efficiency of the above compression space with a predetermined size, herein the description of the memory usage efficiency is represented by the memory application time consumption value. Specifically, when the compression space of the memory is Zi, two or more application programs may simultaneously run in at least one of the above memory application operations, the above application programs may be application programs specially written for testing, the memory size applied by each application program used for testing preferably has certain representativeness, for example, a plurality of programs with a large amount of memory applications and a plurality of programs with a small amount of memory applications may be configured with the memory size of the above terminal for reference, thus the test result will be more accurate. After applying for the memory in accordance with the above technical scheme, the time for the memory application of each application programs is accumulated and calculated to obtain the total memory application time consumption value. If two application programs used for testing simultaneously run, the sum of all memory application time counted by each application program is P1 and P2, the above memory application time consumption value is Pi=P1+P2 when the compression space is Zi.

Alternatively, a plurality of memory application operations can be carried out for the accuracy of the test, the application may be performed cyclically a number of times in each memory application operation, and specifically, the flow for calculating the memory application time consumption value is:
startTime: = current system time Now();
applying for a small memory multiple times cyclically;

| Z0 | Z1 | Z2 | Z3 | Z4 | Z5 | Z6 | Z7 | Z8 |
|---|---|---|---|---|---|---|---|---|
| 0 | F/(8*2) | F/(7*2) | F/(6*2) | F/(5*2) | F/(4*2) | F/(3*2) | F/(2*2) | F/(1*2) |

applying for a medium memory multiple times cyclically;
applying for a large memory multiple times cyclically;
a total memory application time consumption value P: =Now()-startTime;
the flow ends.

Alternatively, there are a plurality of memory application operations in the memory application step, and the amount of the memory application corresponding to each memory application operation is different.

Alternatively, the amount of the memory application corresponding to the above plurality of memory application operations is evenly distributed in an interval [0, F/2], herein F represents the size of the physical space of the above memory. With the technical scheme of the above embodiment, the amount of the memory application corresponding to the memory application operations is more representative, and is in an increasing state within a range of applicable size.

Alternatively, the terminal is in a standby idle state. On the one hand, the test on the memory usage efficiency is required to run various application programs used for testing, which will affect the normal use of the terminal, phenomena such as a time delay would be caused; on the other hand, if the memory test is carried out while other applications are used, the accuracy of the test conclusion will certainly be affected since other application programs will call the memory, for example, running a game application which relatively consumes memory.

FIG. 2 is a schematic diagram of a structure of a memory configuration device according to the embodiment of the present invention. As shown in FIG. 2, the present invention further provides a memory configuration device for a terminal with a memory, and the above memory configuration device includes:
a test module, testing a memory usage efficiency of the memory corresponding to each compression space configuration respectively according to a plurality of compression space configurations; and
a configuration module, configuring the memory according to a compression space configuration with the highest memory usage efficiency.

Alternatively, the above memory usage efficiency is described by a memory application time consumption value, the smaller the memory application time consumption value is, the higher the memory usage efficiency is.

Alternatively, the size of the compression space to be tested corresponding to the plurality of compression space configurations is evenly distributed in an interval [0, F/2], herein F represents the size of the physical space of the memory.

Alternatively, testing the memory usage efficiency of the memory corresponding to each compression space configuration includes:
a configuration unit, configuring the above memory according to a current compression space configuration;
a memory application unit, performing at least one memory application operation on the above configured memory; and
an efficiency statistics unit, acquiring a consumption time of the above memory application operation to serve as the above memory application time consumption value corresponding to the above current compression space configuration.

Alternatively, there are a plurality of memory application operations in the above memory application unit, and the amount of the memory application corresponding to each memory application operations is different.

With the above memory configuration device of the embodiment, the size of the compression space in the memory compression technology can be dynamically adjusted according to different programs run by various users, which achieves the purpose of improving furthest the system memory usage efficiency, and avoids the problem in the existing technology that the memory usage efficiency of part of user terminals is decreased instead after using the memory compression technology.

The above embodiments are only the preferred embodiments of the present invention, and any combinations and modifications of the above embodiments shall be considered to be within the protection scope of the present invention.

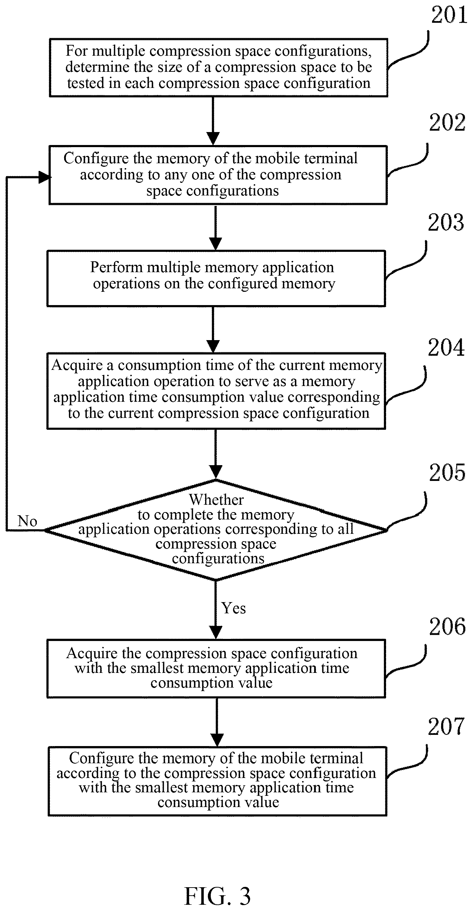

FIG. 3 is another schematic diagram of a flow of a memory configuration method according to the embodiment of the present invention. As shown in FIG. 3, the present invention provides a memory configuration method for a terminal with a memory, in the embodiment, n tests for the memory usage efficiency are performed on the above terminal, the size of the physical memory of the above terminal is F, when the above terminal is in an idle state after the above terminal has been used by the user for a period of time, the above memory configuration method is performed, which includes:
In step 201, the size of a compression space to be tested in each compression space configuration is determined for a plurality of compression space configurations.

In the embodiment, the number of tests n for the memory usage efficiency is set to 8, then the F/2 is averaged into 8 equal parts, F/(8*2) is set as the smallest compression space corresponding to the above compression space configurations, and the F/(8*2) is also taken as a basic value, afterwards, when determining the size of the compression space corresponding to each compression space configuration, the above basic value is multiplied by a positive integer in 0-8 in sequence, and sizes of compression spaces corresponding to the above plurality of compression space configurations are different, for example, the size of the compression space may be F/(8*2)*3, F/(8*2)*7 and so on.

In step 202, the memory of the above terminal is configured according to any of the above compression space configurations.

In step 203, a plurality of memory application operations are performed on the above configured memory.

In the embodiment, it may be set to perform two memory application operations, a small memory is applied for multiple times in one test, a large memory is applied for multiple times in another test, and the above small memory and large memory are relative to the physical size of the memory of the above terminal, and the purpose thereof is to obtain more accurate test data through a plurality of application operations for the large memory and small memory.

In step 204, the current consumption time of the above memory application operation is acquired to serve as the above memory application time consumption value corresponding to the current compression space configuration.

In step 205, it is judged whether memory application operations corresponding to all above compression space configurations are completed, a judgment result is acquired, and when the above judgment result indicates that the memory application operations corresponding to all above compression space configurations are not completed, it is to return to the step 202.

In step 206, when the above judgment result indicates that memory application operations corresponding to all the above compression space configurations have been completed, the above compression space configuration with the smallest memory application time consumption value is acquired.

In the embodiment, the memory application time consumption value corresponding to each compression space configuration is obtained by accumulating the time used by the above plurality of memory application operations, if the number of the above memory application operations corresponding to each compression space configuration is 2, and the time corresponding to the above two memory application operations is Pn1 and Pn2 respectively, then the memory application time consumption value corresponding to each compression space configuration is Pn=Pn1+Pn2. Then, the above compression space configuration with the smallest memory application time consumption value is acquired by comparing the memory application time consumption value Pn corresponding to each compression space configuration.

In step 207, the memory of the above terminal is configured according to the above compression space configuration with the smallest memory application time consumption value. That is, the above compression space configuration of the memory of the above terminal in the current test is configured as the size of the compression space corresponding to the compression space configuration with the smallest memory application time consumption value.

For the above memory configuration method of the present invention, it can be executed by selecting a manual mode or an automatic mode. In the manual mode, the user can execute the above memory configuration at a certain time point every few days or every day according to the usage habit. In the automatic mode, when the terminal is in a standby idle state after the terminal is used for a period of time, it is automatically executed when reaching a preset time point. The frequency for automatically executing the above memory configuration is not required to be too high, generally it can be once a day or once every other day.

In the Android system, the average time of application for the terminal memory can be shortened about 5%∼10% by the technical scheme of the present invention, according to the actual measurement and calculation.

The above description is the preferred embodiments of the present invention, it should be noted that, for those ordinary people skilled in the art, various improvements and embellishments can also be made on the premise of not departing from the principle of the present invention, and these improvements and embellishments shall also be within the protection scope of the present invention.

### Industrial Applicability

The above technical scheme provided by the present invention can be applied in a memory configuration process, the size of the compression space in the memory compression technology is dynamically adjusted according to different programs run by various users, which achieves the purpose of improving furthest the system memory usage efficiency, and avoids the problem in the existing technology that the memory usage efficiency of part of user terminals is decreased instead after using the memory compression technology.

## Claims

1. A memory configuration method, used for a terminal with a memory, comprising:
a test step, testing a memory usage efficiency of the memory corresponding to each compression space configuration respectively according to a plurality of compression space configurations; and
a configuration step, configuring the memory according to a compression space configuration with a highest memory usage efficiency.

2. The memory configuration method according to claim 1, wherein the memory usage efficiency is described by a memory application time consumption value, the smaller the memory application time consumption value is, the higher the memory usage efficiency is.

3. The memory configuration method according to claim 1, wherein a size of a compression space to be tested corresponding to the plurality of compression space configurations is evenly distributed in an interval [0, F/2], wherein F represents a physical space size of the memory.

4. The memory configuration method according to claim 2, wherein testing a memory usage efficiency of the memory corresponding to each compression space configuration comprises:
a configuration step, configuring the memory according to a current compression space configuration;
a memory application step, performing at least one memory application operation on the configured memory; and
an efficiency statistics step, acquiring a consumption time of the memory application operation to serve as the memory application time consumption value corresponding to the current compression space configuration.

5. The memory configuration method according to claim 4, wherein there are a plurality of memory application operations in the memory application step, and an amount of the memory application corresponding to each memory application operations is different.

6. The memory configuration method according to claim 5, wherein an amount of the memory application corresponding to the plurality of memory application operations is evenly distributed in an interval [0, F/2], wherein F represents a physical space size of the memory.

7. The memory configuration method according to claim 1, wherein the terminal is in a standby idle state.

8. A memory configuration device, applied to a terminal with a memory, comprising:
a test module, testing a memory usage efficiency of the memory corresponding to each compression space configuration respectively according to a plurality of compression space configurations; and
a configuration module, configuring the memory according to a compression space configuration with a highest memory usage efficiency.

9. The memory configuration device according to claim 8, wherein the memory usage efficiency is described by a memory application time consumption value, the smaller the memory application time consumption value is, the higher the memory usage efficiency is.

10. The memory configuration method according to claim 8, wherein a size of a compression space to be tested corresponding to the plurality of compression space configurations is evenly distributed in an interval [0, F/2], wherein, F represents a physical space size of the memory.

11. The memory configuration device according to claim 9, wherein, testing a memory usage efficiency of the memory corresponding to each compression space configuration comprises:
a configuration unit, configuring the memory according to a current compression space configuration;
a memory application unit, performing at least one memory application operation on the configured memory; and
an efficiency statistics unit, acquiring a consumption time of the memory application operation to serve as the memory application time consumption value corresponding to the current compression space configuration.

12. The memory configuration device according to claim 11, wherein, there are a plurality of memory application operations in the memory application unit, and an amount of the memory application corresponding to each memory application operations is different.
